# EUROPÄISCHE PATENTSCHRIFT

(11) **EP 1 099 889 B1**
(45) Veröffentlichungstag und Bekanntmachung des Hinweises auf die Patenterteilung: **31.05.2006**
(21) Anmeldenummer: 00123974.8
(22) Anmeldetag: 03.11.2000
(51) Int. Cl.: F16H 61/40, F15B 11/04, F15B 20/00

(54) **Steuerungseinrichtung und Fahrzeug**
Control assembly and vehicle
Agencement de commande et véhicule

(30) Priorität: 10.11.1999 US 437613
(43) Veröffentlichungstag der Anmeldung: 16.05.2001
(73) Patentinhaber: DEERE & COMPANY, Moline, Illinois 61265-8098 (US)
(72) Erfinder: Malone, Johnathan E., Knoxville, TN 37923 (US)
(74) Vertreter: Magin, Ludwig Bernhard

(56) Entgegenhaltungen:
- EP-A- 0 497 197
- EP-A- 0 608 735
- EP-A- 0 787 618
- US-A- 5 894 899
- PATENT ABSTRACTS OF JAPAN vol. 2000, no. 04, 31. August 2000 (2000-08-31) & JP 2000 002330 A (ISEKI &CO LTD), 7. Januar 2000 (2000-01-07)

## Beschreibung

Die Erfindung betrifft eine Steuerungseinrichtung mit einer über eine schaltbare Leitung mit einer Stromquelle verbindbaren Auswahleinrichtung, die zumindest eine erste Stellung und eine zweite Stellung aufweist, und einem durch die Auswahleinrichtung elektrisch betätigbaren Bereichsauswahlventil, das zumindest einen ersten und einen zweiten Betriebsbereich zur Verfügung stellt, wobei es sich bei dem ersten Betriebsbereich um einen Niedriggeschwindigkeitsbereich und bei dem zweiten Betriebsbereich um einen Hochgeschwindigkeitsbereich eines Getriebes handelt.

Nutzfahrzeuge, wie beispielsweise Kompaktlader (skid steer loader), weisen oftmals hydraulisch angetriebene Getriebe mit einem Hochgeschwindigkeits- und einem Niedriggeschwindigkeitsbetriebsbereich auf. Der Geschwindigkeitsbereich wird über an den Getrieben vorgesehene Ventile bestimmt, deren Solenoid durch Geschwindigkeitssteuerungseinrichtungen, die beispielsweise an einer Armaturentafel vorgesehen sein können, angesteuert wird, so daß eine Bedienungsperson den jeweiligen Geschwindigkeitsbereich auswählen kann. Wird das Nutzfahrzeug abgeschaltet, wenn die Geschwindigkeitssteuerungseinrichtung sich in ihrer Hochgeschwindigkeitsstellung befindet, so wird das Fahrzeug nach einem Wiederanlassen in seinem Hochgeschwindigkeitsbetrieb arbeiten, es sei denn, die Geschwindigkeitssteuerungseinrichtung wird durch eine Bedienungsperson manuell in ihre Niedriggeschwindigkeitsstellung gebracht. Ein solches Fahrzeug wird beispielsweise in der US-A-5,894,899 gezeigt.

Die EP-A2-0 497 197 zeigt einen Zünd- und Steuerstromkreis für ein Fahrzeug, welche wahlweise einen Handstart eines Verbrennungsmotors erlaubt, wenn die Batterie ausgefallen oder nicht vorhanden ist. Ein Anlassen des Verbrennungsmotors über die Batterie oder eine Handstartvorrichtung ist nur möglich, wenn das Relais erregt ist und keine Betriebsbedingungen des Fahrzeugs vorliegen.

Das der Erfindung zugrunde liegende Problem wird darin gesehen, daß solche Geschwindigkeitswahleinrichtungen bzw. Auswahleinrichtungen oftmals durch eine Bedienungsperson bei einem einen Arbeitsbeginn bzw. einer Betriebsaufnahme unbeabsichtigt in ihrer Hochgeschwindigkeitsstellung belassen werden und es zu einem für die Bedienungsperson überraschenden Betriebs-/Arbeitsverhalten kommen kann.

Dieses Problem wird erfindungsgemäß durch die Lehre der Patentansprüche 1 bzw. 6 gelöst, wobei in den weiteren Patentansprüchen die Lösung in vorteilhafter Weise weiterentwickelnde Merkmale aufgeführt sind.

Auf diese Weise wird eine Steuerungseinrichtung zur Verfügung gestellt, die einen bestimmten bzw. ersten Betriebszustand bzw. Betriebsbereich sicherstellt, nachdem eine Verbindung der Bereichsauswahleinrichtung mit der Stromquelle, beispielsweise durch die Betätigung eines Zündschalters oder einer Aktivierungseinrichtung hergestellt wurde, und so der zweite Getriebebetriebszustand bei Betriebsaufnahme nicht versehentlich oder unbeabsichtigt aktiviert ist. Eine solche Steuerungseinrichtung weist eine Bereichsauswahleinrichtung und ein Steuerrelais auf, die über eine schaltbare Leitung mit einer Stromquelle verbindbar sind. Die Bereichsauswahleinrichtung weist einen Eingang auf, der mit der schaltbaren Leitung über das Steuerrelais verbunden ist. Ein Ausgang der Auswahleinrichtung ist mit einem elektrisch betätigbaren Bereichsauswahlventil verbunden, welches den Betriebsbereich bzw. den Betriebsgeschwindigkeitsbereich des Fahrzeugs steuert. Die Stellung des Bereichsauswahlventils ist sowohl abhängig von der Stellung der Auswahleinrichtung als auch von dem Zustand des Steuerrelais. Das Steuerrelais ist deaktiviert, wenn die schaltbare Leitung ausgeschaltet und nicht stromführend ist, und wechselt nur in einen aktivierten Zustand, um einen zweiten Betriebszustand bzw. Hochgeschwindigkeitsbereich auszuwählen, wenn die Auswahleinrichtung nach einem Stromlos-Machen der schaltbaren Leitung sich zuvor in ihrer ersten Stellung befindet bzw. in diese gebracht wird. Befindet sich die Auswahleinrichtung in ihrer zweiten Stellung, wenn die schaltbare Leitung stromführend wird, verbleibt das Steuerrelais deaktiviert, bis die Auswahleinrichtung in ihre erste Stellung gebracht wird. Danach aktiviert ein Wechsel der Auswahleinrichtung von ihrer ersten Stellung in ihre zweite Stellung bei stromführender, schaltbarer Leitung und aktiviertem Steuerrelais das elektrisch betätigbare Bereichsauswahlventil, beispielsweise um ein Getriebe bzw. ein Fahrzeug in den zweiten Getriebebetriebszustand bzw. den Hochgeschwindigkeitsbereich zu bringen.

Ein System mit einer Auswahleinrichtung und einem Steuerrelais kann auch mit einem Hydrauliksystem mit variablem Durchfluß verwendet werden, welches Hydraulikdruck für zusätzliche durch das Fahrzeug angetriebene Anbauteile bzw. -geräte zur Verfügung stellt. Eine beispielsweise in der Art eines Steuerschalters ausgeführte Auswahleinrichtung weist eine AUS-, eine Betriebs- und eine EIN-Stellung auf und ist mit dem Steuerrelais sowie mit einer schaltbaren, stromführenden Leitung verbunden. In der AUS-Stellung oder wenn die schaltbare Leitung nicht stromführend ist, ist das Steuerrelais deaktiviert, um einen geringen Hydraulikmitteldurchfluß zur Verfügung zu stellen. Danach muß, um das Steuerrelais in seiner aktivierten Stellung festzulegen und um einen hohen Hydraulikmitteldurchfluß zur Verfügung zu stellen, die Auswahleinrichtung zuerst in ihre erste EIN-Stellung gebracht werden, bevor sie in die Betriebsstellung:freigegeben wird.

Eine solche Steuerungseinrichtung ist verhältnismäßig einfach und kostengünstig und verhindert einen Betrieb eines Getriebes bzw. eines Fahrzeugs bei Arbeitsbeginn oder allgemein nach einem Deaktivieren der Stromzufuhr in einem nicht beabsichtigten Betriebszustand bzw. in einem Hochgeschwindigkeitsbereich, selbst wenn sich die Auswahleinrichtung in einer Stellung für einen weiteren Betriebszustand bzw. für einen Hochgeschwindigkeitsbetrieb befindet. Aufwendige und teuere Verriegelungs- bzw. Verbindungsgestänge oder -kreise werden nicht benötigt und die Einrichtung arbeitet einfach und direkt.

In der Zeichnung ist ein nachfolgend näher beschriebenes Ausführungsbeispiel der Erfindung dargestellt. Es zeigt:
- Fig. 1: eine schematische Darstellung einer Steuerungseinrichtung zur Verwendung an einem Fahrzeug mit einem Bereichsauswahlventil zur Auswahl eines Geschwindigkeitsbereichs und
- Fig. 2: eine schematische Darstellung eines ähnlichen Hydrauliksystems mit einem Bereichsauswahlventil für unterschiedliche Durchflußbereiche.

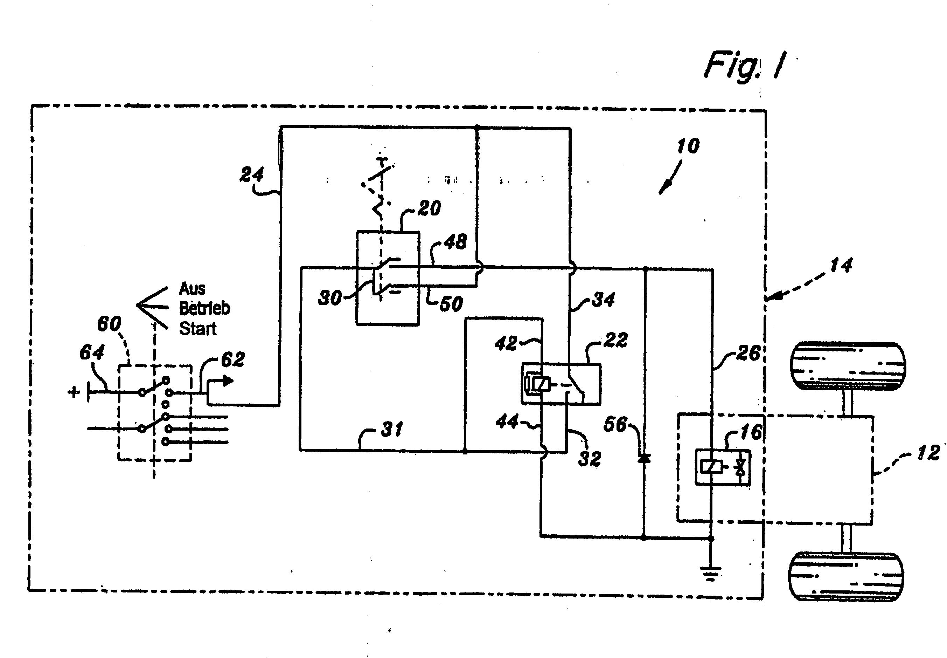

Es wird nun auf Fig. 1 Bezug genommen, in der ein Geschwindigkeitssteuerungssystem bzw. eine Steuerungseinrichtung 10 zur Steuerung eines hydraulischen Getriebes bzw. eines Flüssigkeitsgetriebes 12 gezeigt wird, das einen Hochgeschwindigkeitsausgabebetrieb und einen Niedriggeschwindigkeitsausgabebetrieb aufweist, um ein Fahrzeug 14 wie einen Kompaktlader (skid steer loader) in zwei oder mehrere Geschwindigkeitsbereiche zu bewegen. Ein als elektrohydraulisches Getriebegeschwindigkeitssteuerungsventil ausgeführtes Bereichsauswahlventil 16 stellt den hohen Geschwindigkeitsbereich des Betriebes, wenn es aktiviert ist, und den Niedriggeschwindigkeitsbereich des Getriebes, wenn es deaktiviert ist, zur Verfügung

Um den Geschwindigkeitsbereich zu steuern, sind ein Geschwindigkeitsbereichswahlschalter bzw. eine Auswahleinrichtung 20 und ein Geschwindigkeitssteuerungsrelais, das im folgenden als Steuerrelais 22 bezeichnet wird, zwischen einer schaltbaren, stromführenden Leitung 24 und einem Steuereingang 26 des Bereichsauswahlventils 16 angeordnet. Die Auswahleinrichtung 20 weist Eingänge 30 auf, welche über eine Leitung 31 miteinander und mit einem schaltbaren Ausgang 32 an dem Steuerrelais 22 verbunden sind. Ein gegenüberliegender Ausgang 34 des Steuerrelais 22 ist mit der schaltbaren Leitung 24 verbunden. Die Eingänge 30 sind auch mit einem Steuereingang bzw. Anschluß 42 der Spule des Steuerrelais 22 verbunden. Der gegenüberliegende Anschluß 44 der Spule ist geerdet.

Die Auswahleinrichtung 20, wie sie in Fig. 1 gezeigt wird, weist eine erste oder Niedriggeschwindigkeitsstellung (in der Darstellung die obere Stellung) in der ein Ausgang 48, der mit der Leitung zu dem Anschluß 42 verbunden ist, offen ist, so daß an das Bereichsauswahlventil 16 kein Strom angelegt ist und der Niedriggeschwindigkeitsbereich des Betriebs zur Verfügung gestellt wird. In der ersten Stellung ist ein zweiter Ausgang 50 über den Schalter mit der Leitung 31 verbunden, um einen geschlossenen Pfad zwischen der schaltbaren Leitung 24 und dem Steuereingang bzw. dem Anschluß 42 des Steuerrelais 22 zur Verfügung zu stellen. Daher wird, wenn die schaltbare Leitung 24 mit Strom beaufschlagt ist und sich die Auswahleinrichtung 20 in ihrer ersten bzw. Niedriggeschwindigkeitsstellung, wie sie in Fig. 1 gezeigt wird, befindet, sich das Halterelais 22 aktivieren, um einen geschlossenen Pfad zwischen den Ausgängen 32 und 34 herzustellen und die schaltbare Leitung 24 mit dem Anschluß 42 zu verbinden, so daß das Relais in der EIN-Stellung gehalten (bootstrapped) wird, solange die schaltbare Leitung 24 stromführend ist. Wenn der Pfad zu dem Steuereingang 26 jedoch offen ist, wenn die Auswahleinrichtung 20 sich in ihrer gezeigten ersten bzw. Niedriggeschwindigkeitsstellung befindet, wird das Bereichsauswahlventil 16 deaktiviert werden und der Niedriggeschwindigkeitsbereich wird durch das Bereichsauswahlventil 16 begründet. Um einen Hochgeschwindigkeitsbetrieb hervorzurufen, bewegt eine Bedienungsperson die Auswahleinrichtung 20 aus der in Fig. 1 gezeigten Stellung nach unten, um einen geschlossenen Kreis von dem Steuereingang 26 zu der stromführenden, schaltbaren Leitung 24 über die Ausgänge 48 und 30 der Auswahleinrichtung 20 und die Ausgänge 32 und 34 des Steuerrelais 22 zu begründen. Das Bereichsauswahlventil 16 aktiviert sich für einen Hochgeschwindigkeitsbetrieb.

Wird die schaltbare Leitung 24 aus irgendeinem Grund nicht stromführend, wird sich das Steuerrelais 22 deaktivieren und den Kreis zwischen der schaltbaren Leitung 24 und dem Bereichsauswahlventil 16 öffnen. Wenn die schaltbare Leitung 24 wieder stromführend wird, kann das Steuerrelais 22 nur in seiner aktivierten Stellung gehalten (bootstrapped) werden, wenn die Auswahleinrichtung 20 zuerst in ihrer Niedriggeschwindigkeitsstellung gewesen ist. Daher wird das Steuerrelais 22, wenn eine Bedienungsperson die Auswahleinrichtung 20 in ihre Hochgeschwindigkeitsstellung beläßt, wenn die schaltbare Leitung 24 stromführend wird, nicht aktiviert werden, bevor die Auswahleinrichtung 20 zuerst nach oben in ihre Niedriggeschwindigkeitsstellung gebracht wird, um den Ausgang 42 über die Ausgänge 30 und 50 zu beaufschlagen. Das System ist gezwungen in der Niedriggeschwindigkeitsbedingung bzw. dem Niedriggeschwindigkeitsbereich zu arbeiten, bis die Bedienungsperson die Auswahleinrichtung 20 nach dem Stromführend-Werden der schaltbaren Leitung 24 bewegt, wodurch ein anfänglicher, unbeabsichtigter Hochgeschwindigkeitsbetrieb verhindert wird. Eine Diode 56 ist parallel zu dem Solenoid des Bereichsauswahlventils 16 geschaltet, um Spannungsspitzen zu begrenzen.

Wie es in Fig. 1 dargestellt wird, ist die schaltbare Leitung 24 mit einem konventionellen Zündschalter 60 des Fahrzeugs 14 verbunden. Der Zündschalter 60 weist eine Aus- (gezeigt), Betriebs- und eine Startstellung auf und umfaßt einen mit der schaltbaren Leitung 24 verbundenen Anschluß 62. Wenn sich der Zündschalter 60 in seiner zweiten oder Betriebsstellung (oder in einer Zusatzstellung, wenn eine Zusatzstellung an dem Schalter vorgesehen ist) befindet, wird Systemleistung an die schaltbare Leitung 24 über den Anschluß 62 und einen Ausgang 64 geliefert,welcher mit einer Stromquelle, wie einer Batterie oder einer Lichtmaschine, des Fahrzeugs 14 verbunden ist. Wenn der Zündschalter 60 sich in seiner Aus- oder in seiner Startstellung befindet, ist die schaltbare Leitung 24 nicht stromführend. Daher wird, wenn das Fahrzeug 14 angelassen wird oder wenn der Zündschalter 60 sich in seiner Ausstellung befindet, das Steuerrelais 22 deaktiviert. Wenn die schaltbare Leitung 24 wiederum durch eine Bewegung des Zündschalters 60 in seine Betriebs- (oder Zusatz-) Stellung stromführend wird, muß die Auswahleinrichtung 20 zuerst in ihre Niedriggeschwindigkeitsstellung (gezeigt) gebracht werden, um das Steuerrelais 22 zu aktivieren und um die Hochgeschwindigkeitsauswahl der Auswahleinrichtung 20 zu ermöglichen.

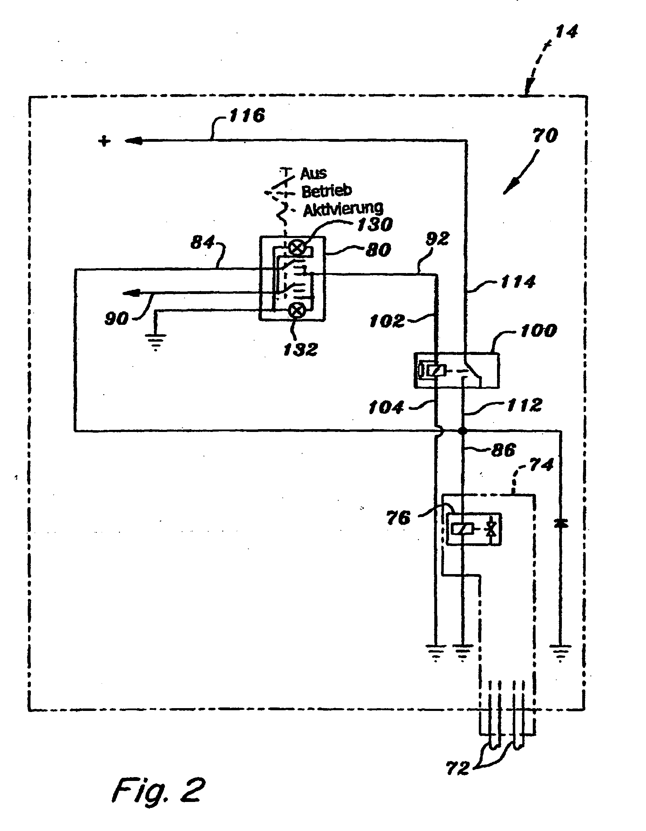

Es wird nun auf Figur 2 Bezug genommen, in der ein Hydrauliksteuerungssystem bzw. Steuerungssystem 70 gezeigt wird, um Hydraulikleitungen bzw. Zusatzleitungen 72 eines Hydrauliksystems 74 des Fahrzeugs 14 selektiv zu beaufschlagen. Eine übliche Quelle von Hydraulikmedium (nicht gezeigt) ist über ein elektrohydraulisches Hochdurchfluß-/Niedrigdurchfluß-Steuerungsventil, das im folgenden als Bereichsauswahlventil 76 bezeichnet wird, verbunden. Ein drei Stellungen aufweisender Durchflußsteuerungsschalter bzw. eine Auswahleinrichtung 80 weist eine AUS-Stellung (gezeigt), eine zentrale Betriebsstellung und eine untere Aktivierungsstellung auf. Ein Anschluß 84 ist mit einer Eingangssteuerungsleitung 86 des Bereichsauswahlventils 76 verbunden. Ein zweiter Anschluß 90 ist mit einer Quelle von Steuerleistung an dem Fahrzeug 14, wie beispielsweise der schaltbaren Leitung 24 von dem Zündschalter 60 verbunden. Ein Ausgang 92 ist mit den Kontakten der Auswahleinrichtung 80 derart verbunden, daß ein offener Kreis zu dem Ausgang 92 vorgesehen ist, wenn sich die Auswahleinrichtung 80 in ihrer AUS-Stellung befindet, daß der Ausgang 84 mit dem Ausgang 92 verbunden ist, wenn sich die Auswahleinrichtung 80 in ihrer Betriebsstellung befindet und daß eine Verbindung zwischen den Anschlüssen 84 und 90 hergestellt wird, wenn sich die Auswahleinrichtung 80 in ihrer Aktivierungsstellung befindet.

Ein Hochdurchflußrelais bzw. ein Steuerrelais 100 weist einen Steuereingang 102, welcher mit dem Ausgang 92 der Auswahleinrichtung 80 verbunden ist, und einen gegenüberliegenden Anschluß 104 auf, welcher geerdet ist. Ein schaltbarer Relaisanschluß 112 ist mit der Steuerleitung 86 des Steuerventils 76 und mit dem Ausgang 84 verbunden. Der gegenüberliegende Anschluß 114 ist mit einer schaltbaren Leitung 116 verbunden, welche einen stromführenden und einen nicht stromführenden Zustand aufweist. Wie es aus Fig. 2 ersehen werden kann, kann, wenn das Steuerrelais 100 deaktiviert ist, das Steuerrelais 100 nur aktiviert werden, indem die Auswahleinrichtung 80 in ihre unterste Stellung oder Aktivierungsstellung gebracht wird, während der Ausgang 90 mit Strom beaufschlagt ist (beispielsweise während der Zündschalter 60 sich in seiner An- oder Zusatzstellung befindet), um einen geschlossenen Kreis zwischen den Ausgängen 90 und 92 aufzubauen und Strom an den Solenoid des Steuerrelais 100 zu liefern. Das Steuerrelais 100 wird sich aktivieren und einen geschlossenen Kreis zwischen der schaltbaren Leitung 116 und dem Steuereingang 102 über die Anschlüsse 114, 112 und 84, 92 begründen. Wenn die schaltbare Leitung 116 stromführend wird, wird das Halterelais 100 in seiner AN-Stellung festgelegt (bootstrapped), wenn die Auswahleinrichtung 80 sich in ihrer Betriebsstellung oder ihrer Aktivierungsstellung befindet und das Bereichsauswahlventil 76 wird aktiviert, um einen Hochdurchflußzustand zu den Zusatzleitungen 72 zur Verfügung zu stellen. Wenn die Bedienungsperson die Auswahleinrichtung 80 freigibt, bewegt sich die Auswahleinrichtung 80 in ihre Betriebsstellung.

Wenn die Leitung aus irgendwelchen Gründen nicht stromführend wird, wird das Steuerrelais 100 deaktiviert und das Steuerventil 76 wird in seinen Niedrigdurchflußzustand zurückkehren. Das Steuerrelais 100 kann dann nur reaktiviert werden, indem die Auswahleinrichtung 80 manuell in die Aktivierungsstellung gebracht wird, wenn der Ausgang 90 beaufschlagt ist. Dadurch wird einem unbeabsichtigten Anlassen des Systems in dem Hochdurchflußzustand vorgebeugt. Eine Hintergrundleuchte 130 beleuchtet das Schalterareal, wenn der Ausgang 90 mit Strom beaufschlagt ist. Eine zweite Signalleuchte 132 ist zwischen dem Ausgang 92 und Masse geschaltet und liefert an die Bedienungsperson ein Signal, wenn das Steuerrelais 100 beaufschlagt ist.

Mit der Beschreibung der bevorzugten Ausführungsform, wird es deutlich, daß mannigfaltige Modifikationen durchgeführt werden können, ohne vom Bereich der Erfindung, wie er durch die beiliegenden Ansprüche bestimmt wird, abzuweichen.

## Patentansprüche

1. Steuerungseinrichtung (10) mit einer über eine schaltbare Leitung (24) mit einer Stromquelle verbindbaren Auswahleinrichtung (20, 80), die zumindest eine erste Stellung und eine zweite Stellung aufweist, und einem durch die Auswahleinrichtung (20, 80) elektrisch betätigbaren Bereichsauswahlventil (16, 76), das zumindest einen ersten und einen zweiten Betriebsbereich zur Verfügung stellt, wobei es sich bei dem ersten Betriebsbereich um einen Niedriggeschwindigkeitsbereich und bei dem zweiten Betriebsbereich um einen Hochgeschwindigkeitsbereich eines Getriebes handelt, **dadurch gekennzeichnet, daß** die Auswahleinrichtung (20, 80) derart mit einem Steuerrelais (22, 100) verbunden ist, daß das Steuerrelais (22, 100), wenn die Auswahleinrichtung (20, 80) ihre erste Stellung einnimmt und die schaltbare Leitung (24) stromführend ist, eine bei stromloser schaltbarer Leitung (24) geöffnete Verbindung schließt, die das Bereichsauswahlventil (16, 76) sowie das Steuerrelais (22, 100) mit der Stromquelle bzw. der schaltbaren Leitung (24) verbindet, wenn die Auswahleinrichtung (20, 80) ihre zweite Stellung einnimmt.

2. Steuerungseinrichtung nach Anspruch 1 der vorherigen Ansprüche, **dadurch gekennzeichnet, daß** die Auswahleinrichtung (20, 80) einen ersten Ausgang (48, 84), der mit dem Bereichsauswahlventil (16, 76), und einen zweiten Ausgang (50, 90) der mit der schaltbaren Leitung (24) verbindbar ist, aufweist.

3. Steuerungseinrichtung nach einem oder mehreren der vorherigen Ansprüche **daduch gekennzeichnet, daß** das Steuerrelais (22, 100) einen Solenoid sowie einen durch diesen gesteuerten Schalter aufweist.

4. Steuerungseinrichtung nach einem oder mehreren der vorherigen Ansprüche, **dadurch gekennzeichnet, daß** zumindest die schaltbare Leitung (24) mit einem Zündschalter (60) verbunden ist und/oder stromführend ist, wenn sich der Zündschalter (60) in einer Start- bzw. einer Betriebsstellung befindet.

5. Steuerungseinrichtung nach einem oder mehreren der vorherigen Ansprüche, **dadurch gekennzeichnet, daß** es sich bei dem ersten Betriebsbereich um einen Bereich niedrigen Hydraulikmitteldurchflusses und bei dem zweiten Betriebsbereich um einen Bereich hohen Hydraulikmitteldurchflusses handelt.

6. Fahrzeug (14), insbesondere ein Nutzfahrzeug, mit einer Steuerungseinrichtung (10) nach einem oder mehreren der vorherigen Ansprüche.

## Claims

1. Control assembly (10) comprising a selection device (20, 80) which may be connected to a power source via a switchable line (24) and has at least a first position and a second position, said assembly also comprising a range selection valve (16, 76) which may be electrically actuated by the selection device (20, 80) and makes available at least a first and a second operating range, the first operating range being a low-speed range and the second operating range being a high-speed range of a gear mechanism, **characterised in that** the selection device (20, 80) is so connected to a control relay (22, 100) that, when the selection device (20, 80) assumes its first position and the switchable line (24) carries current, the control relay (22, 100) closes a connection which is open if the switchable line (24) is current-free and which connects the range selection valve (16, 76) and the control relay (22, 100) to the power source or the switchable line (24) when the selection device (20, 80) assumes its second position.

2. Control assembly according to claim 1 of the preceding claims, **characterised in that** the selection device (20, 80) has a first output terminal (48, 84) which may be connected to the range selection valve (16, 76), and a second output terminal (50, 90) which may be connected to the switchable line (24).

3. Control assembly according to one or more of the preceding claims, [**characterised**] **in that** the control relay (22, 100) has a solenoid as well as a switch controlled by same.

4. Control assembly according to one or more of the preceding claims, **characterised in that** at least the switchable line (24) is connected to an ignition switch (60) and/or carries current when the ignition switch (60) is in a starting or operating position.

5. Control assembly according to one or more of the preceding claims, **characterised in that** the first operating range is a low flow range for hydraulic fluid and the second operating range is a high flow range for hydraulic fluid.

6. Vehicle (14), especially a utility vehicle, which has a control assembly (10) according to one or more of the preceding claims.

## Revendications

1. Dispositif de commande (10) comportant un sélecteur (20, 80), qui peut être relié à une source de courant via une ligne (24) commutable et qui comporte au moins une première position et une deuxième position, et une vanne de sélection de régime (16, 76), qui peut être actionnée électriquement par le sélecteur (20, 80) et qui met à disposition au moins un premier et un deuxième régime de fonctionnement, le premier régime de fonctionnement étant un régime à faibles vitesses et le deuxième régime de fonctionnement étant un régime à vitesses élevées d'un engrenage, **caractérisé en ce que** le sélecteur (20, 80) est relié à un relais de commande (22, 100) de telle sorte que, lorsque le sélecteur (20, 80) est dans sa première position et que la ligne (24) commutable transporte le courant, le relais de commande (22, 100) ferme une liaison, qui est ouverte lorsque la ligne (24) commutable est sans courant et par laquelle la vanne de sélection de régime (16, 76), ainsi que le relais de commande (22, 100) sont reliés à la source de courant, plus précisément à la ligne (24) commutable, lorsque le sélecteur (20, 80) est dans sa deuxième position.

2. Dispositif de commande selon la revendication 1, **caractérisé en ce que** le sélecteur (20, 80) comporte une première sortie (48, 84), qui peut être reliée à la vanne de sélection de régime (16, 76), et une deuxième sortie (50, 90), qui peut être reliée à la ligne (24) commutable.

3. Dispositif de commande selon une ou plusieurs des revendications précédentes, **caractérisé en ce que** le relais de commande (22, 100) comporte un solénoïde, ainsi qu'un commutateur commandé par ce dernier.

4. Dispositif de commande selon une ou plusieurs des revendications précédentes, **caractérisé en ce qu'**au moins la ligne (24) commutable est reliée à un contacteur d'allumage (60) et/ou transporte le courant lorsque le contacteur d'allumage (60) est dans une position de démarrage ou une position de service.

5. Dispositif de commande selon une ou plusieurs des revendications précédentes, **caractérisé en ce que** le premier régime de fonctionnement est un régime avec un faible écoulement de fluide hydraulique et le deuxième régime de fonctionnement est un régime avec un fort écoulement de fluide hydraulique.

6. Véhicule (14), en particulier véhicule utilitaire, comportant un dispositif de commande (10) selon une ou plusieurs des revendications précédentes.
